# EUROPEAN PATENT SPECIFICATION

(11) **EP 2 677 521 B1**
(45) Date of publication and mention of the grant of the patent: **04.12.2019**
(21) Application number: 13172239.9
(22) Date of filing: 17.06.2013
(51) Int. Cl.: G11B 33/12, G06F 1/16, H04M 1/04

(54) **Docking station**
Andockstation
Station d'accueil

(30) Priority: 19.06.2012 KR 20120065301
(43) Date of publication of application: 25.12.2013
(73) Proprietor: Samsung Electronics Co., Ltd., Gyeonggi-do 16677 (KR)
(72) Inventor: Lee, Jae Cheol, Gyeonggi-do (KR); Yoon, Jong Taek, Gyeonggi-do (KR); Shim, Jae Seong, Gyeonggi-do (KR); Youn, Joo Moon, Seoul (KR); Cho, Kee Yeong, Gyeonggi-do (KR)
(74) Representative: Walaski, Jan Filip

(56) References cited:
- US-A- 5 841 424
- US-A1- 2007 002 533
- US-A1- 2007 101 039
- US-A1- 2007 217 632
- US-A1- 2007 263 348

## Description

The following description relates to a docking station on which a portable media device may be docked to reproduce a sound signal.

Recently, various portable media devices having a sound output function or an image output function have been introduced and extensively used. Such a portable media device is manufactured to record or reproduce a sound signal or an image signal in the form of digital file and includes, as a representative example, an MP3 player, a portable phone (e.g., a smart phone), a portable multimedia player (PMP), and the like.

A portable media device having a sound signal reproduction function stores a sound signal in a semiconductor memory in the form of digital file, and thus, a large amount of digital files may be stored in a relatively small device. Accordingly, a user may conveniently carry and use the portable media device. When the user carries and uses the portable media device, he or she listens to the reproduced sound signal through an ear phone or a head phone, in general.

The sound quality of the sound signal reproduced through the portable media device is not good compared with the sound quality of a sound signal reproduced through a high quality audio device. Thus far, users have wished to listen to sound reproduced through as good an audio system as possible when the user uses the portable media device indoors without carrying the portable media device.

In order to meet such demand, a docking station that allows a portable media device to be docked thereon and to reproduce a sound signal has been developed and introduced. The docking station refers to a device that is coupled with the portable media device through a docking terminal such that users may enjoy audio stored in a memory even in a large area such as a living room.

The best advantage of the docking station is to perform a music listening function, a charging function, an alarm function, and the like at the same time. In particular, users may enjoy high quality sound compared with a case of enjoying music through a speaker of a smart phone. Among docking stations that have been recently introduced, there are many aesthetically pleasing products producing high sound volume compared to volume thereof.

A conventional docking station supports one or several docking terminals that allow only one product group of portable media devices to be connected to the docking station to reproduce a sound signal. For example, iPhones, iPads, and iPods, which are representative portable media devices available from Apple Inc., US, belong to the same product group and are installed with an Apple exclusive terminal (port). In addition, products of the GALAXY series, which are representative portable media devices employing an Android operating system (OS) and are available from Samsung Electronics, Korea, belong to the same product group and are installed with 5-pin micro universal serial bus (USB) terminals (ports). Accordingly, an exclusive docking station for iPhones, iPads, and iPods supports a docking terminal to which only iPhones, iPads, and iPods may be coupled to reproduce a sound signal, and an exclusive docking station for GALAXY series devices supports a docking station to which only GALAXY series products may be coupled to reproduce a sound signal.

Accordingly, a portable media device that is not compatible with a docking terminal installed in a docking station may not be docked with the docking station and may inevitably use a different method in order to reproduce a sound signal. That is, even if a user who uses a plurality of portable media devices of different product groups wants to dock the portable media devices with one docking station, only a device of a product group, which supports reproduction using the docking station, may be docked, but it may be impossible to dock a device of a product group, which does not support reproduction using the docking station, with the docking station. Accordingly, the type of portable media devices for reproduction of a sound signal through one docking station is limited.

US 2007/0263348 discloses a docking station.

Therefore, the following description relates to a docking station to which a plurality of portable media devices belonging to different product groups may be freely connected to reproduce a sound signal.

Different product groups may therefore refer to different docking connectors, so that devices in the same product group share the same docking connector, the docking connector being dockable in a corresponding docking port in a docking station. Different product groups may alternatively or in addition refer to different data communication protocols, so that devices in the same product group share the same data communication protocol.

Additional aspects of the invention will be set forth in part in the description which follows and, in part, will be obvious from the description, or may be learned by practice of the invention.

According to an aspect of the invention, there is provided a docking station according to claim 1.

In accordance with an aspect of the present disclosure, a docking station for docking of a plurality of portable media devices includes a main body, a plurality of accommodation units to accommodate the plurality of portable media devices, the plurality of accommodation units being provided in one side of the main body, and a plurality of docking ports to provide electrical connection between the plurality of portable media devices and the docking station, the plurality of docking ports being installed in the plurality of accommodation units, wherein each of the plurality of docking ports supports electrical connection between the docking station and any one of the plurality of portable media devices belonging to different product groups.

The plurality of docking ports may support data communication and power transmission between the docking station and any one of the plurality of portable media devices.

The docking station may further include a plurality of interface units to perform the data communication between the docking station and any one of the plurality of portable media devices belonging to different product groups.

Each of the plurality of docking ports may include a data communication port to support the data communication and a charging port to support the power transmission.

The docking station may further include a sound signal processor to perform a signal processing process on a sound signal transmitted from the plurality of portable media devices accommodated in the plurality of accommodation units in order to reproduce the sound signal through the plurality of docking ports and the plurality of interface units, and a speaker to externally output the sound signal being performed with a signal processing process thereon through the sound signal processor.

The sound signal processor may include a digital signal processor to perform a digital signal processing process on a sound signal received through any one of the plurality of interface units, and a volume amplifier to amplify a digital sound signal transmitted from the digital signal processor.

The docking station may further include an input unit including a device selection button for selection of a portable media device to reproduce the sound signal among the plurality of portable media devices.

The docking station may further include a switch unit connected between the plurality of interface units and the sound signal processor, wherein the switch unit may be connected to any one of the plurality of interface units according to the device selection signal generated according to manipulation of the device selection button.

The docking station may further include a plurality of sound signal preprocessors connected between the plurality of interface units and the switch unit in order to perform a signal processing signal further required according to properties of each of the plurality of portable media devices belonging to the different product groups.

The docking station may further include a display unit to display various display information generated from the docking station and an operation state of the docking station.

According to the invention, there is further provided a docking station comprising a first docking port to accommodate a first portable media device, a second docking port to accommodate a second portable media device, a sound signal processor to process a sound signal from the first docking port or the second docking port and a switch to selectively connect the sound signal processor to the first docking port or the second docking port, wherein the first portable media device is not compatible with the second docking port.

These and/or other aspects of the invention will become apparent and more readily appreciated from the following description of the embodiments, taken in conjunction with the accompanying drawings of which:
FIG. 1 is a diagram of an outer appearance of a docking station according to an embodiment of the present disclosure;
FIG. 2A is an enlarged diagram of a portion "P" shown in FIG. 1, FIG. 2B is a diagram of the structure of a portable media device load unit of a docking station and the configuration of buttons of an input unit, according to an embodiment of the present disclosure, and FIG. 2C is a diagram of a case in which a portable media device is loaded on a portable media device load unit of a docking station, according to an embodiment of the present disclosure;
FIG. 3 is a diagram for explaining an operation of a case in which two different types of portable media devices are loaded on a docking station, according to an embodiment of the present disclosure;
FIG. 4 is a control block diagram of a docking station according to an embodiment of the present disclosure; and
FIG. 5 is a control block diagram of a docking station according to another embodiment of the present disclosure.

Reference will now be made in detail to the embodiments of the present disclosure, examples of which are illustrated in the accompanying drawings.

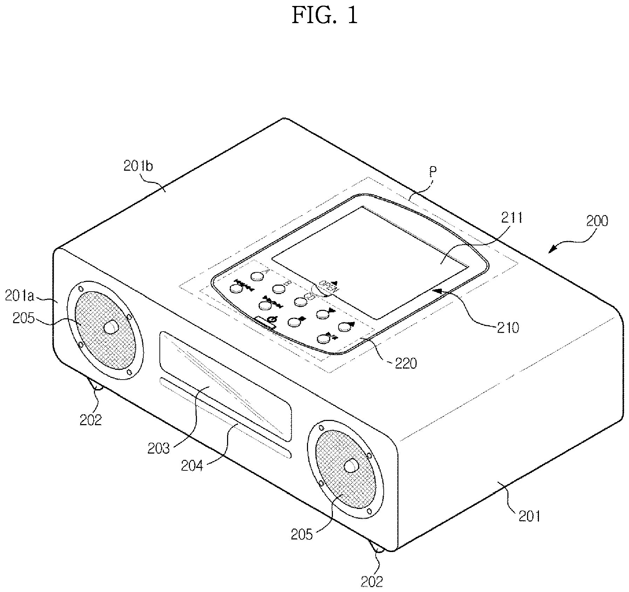

FIG. 1 is a diagram of an outer appearance of a docking station 200 according to an embodiment of the present disclosure.

As shown in FIG. 1, the docking station 200 according to the present embodiment includes a main body 201 constituting the outer appearance of the docking station 200, support members 202 that are formed on edges of the main body 201 in order to support the main body 201 from the ground, a display unit 203 that is installed in a central portion of a front surface 201a of the main body 201 and displays various information regarding an operation of the docking station 200, a compact disc (CD) slot 204 which is formed below a lower end of the display unit 203 and into which a CD is inserted, and speakers 205 which are installed at right and left sides of the front surface 201a of the main body 201 and output a sound signal reproduced through the docking station 200.

The display unit 203 may include a liquid crystal display (LCD), or an organic light emitting diode (OLED), for example, and may display various display information generated from the docking station 200 and a current operation state of the docking station 200 on a screen. In addition, when the display unit 203 is implemented in the form of touchscreen, the display unit 203 may operate as an input unit 220.

The speakers 205 includes a 2.1 channel such that two glass-fiber speakers and subwoofers (which are ultra low frequency speakers) effectively realize a bass band.

In addition, although not shown, a power input port, an external input (AUX IN) port, a headphone connection port, an FM antenna port, a record output (REC OUT) port to which an external device having a record function is connected to record a reproduced sound, a universal serial bus (USB) memory port facilitating recognition of a USB memory, and an optical digital input terminal, for example, may be installed on a rear surface of the main body 201. Likewise, because various input ports are provided on the docking station 200, most various sound signal reproduction devices that have been recently and mainly used as well as a portable media device that is subjected to docking may be connected to the docking station 200 to reproduce a sound signal. That is, the docking station 200 may be compatible with various sound signal reproduction devices.

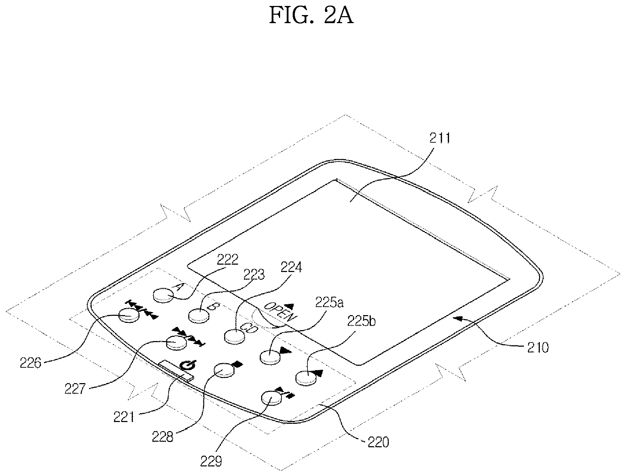

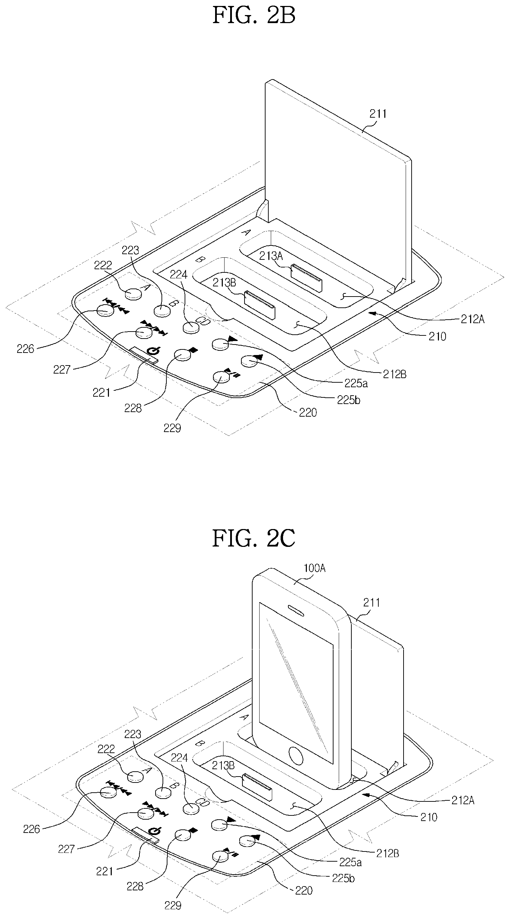

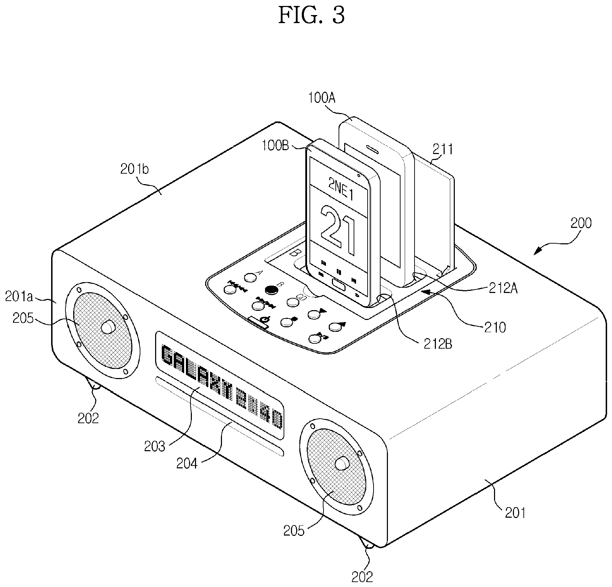

In addition, a portable media device load unit 210, on which portable media devices 100A and 100B (see FIG. 3) to be connected to the docking station 200 are loaded, and the input unit 220, which includes a plurality of manipulation buttons for input of a command for operating the docking station 200, are provided on an upper surface 201b of the main body 201. The structure of the portable media device load unit 210 and the configuration of the buttons of the input unit 220 will be described in more detail with reference to FIGS. 2A and 2B.

FIG. 2A is an enlarged diagram of a portion "P" shown in FIG. 1 and FIG. 2B is a diagram of the structure of the portable media device load unit 210 of the docking station 200 and the configuration of the buttons of the input unit 220, according to an embodiment of the present disclosure.

As shown in FIGS. 2A and 2B, the portable media device load unit 210 provided on the upper surface 201b of the main body 201 includes first and second accommodation units 212A and 212B to physically accommodate lower end portions of a plurality of portable media devices that are subjected to docking, first and second docking ports 213A and 213B to electrically connect the plurality of portable media devices to the docking station 200, and a cover 211 to cleanly maintain or protect the first and second accommodation units 212A and 212B and the first and second docking ports 213A and 213B.

As shown in FIGS. 1 and 2A, when a portable media device is not docked with the docking station 200, the cover 211 may be closed to prevent impurities such as dust or the like from penetrating into the first and second accommodation units 212A and 212B and the first and second docking ports 213A and 213B.

As shown in FIGS. 2A and 2B, the first and second accommodation units 212A and 212B have shapes for stable accommodation of the lower end portions of the first and second portable media devices 100A and 100B (see FIG. 3) which are subjected to docking. In addition, the first and second accommodation units 212A and 212B may have corresponding shapes to shapes of the first and second portable media devices 100A and 100B such that the lower end portions of the first and second portable media devices 100A and 100B are insertable into the first and second accommodation units 212A and 212B. FIGS. 2A and 2B show a case in which the first accommodation unit 212A and the second accommodation unit 212B have the same size and shape. Alternatively, the first accommodation unit 212A and the second accommodation unit 212B may have different sizes and shapes in order to accommodate a plurality of portable media devices having different sizes and shapes. Furthermore, although two accommodation units are illustrated, the disclosure is not limited thereto. For example, the docking station may include three accommodation units, to accommodate three portable media devices.

In general, the first accommodation unit 212A and the second accommodation unit 212B may each be formed to a depth to allow a user to check a user interface (input unit) of a docked (loaded) portable media device.

In addition, marks (in FIG. 2B, the mark "A" corresponds to the first portable media device and the mark "B" corresponds to the second portable media device) are provided at corresponding sides of the first accommodation unit 212A and the second accommodation unit 212B, respectively, and guide a location for loading of a portable media device that is subjected to docking when the user wants to dock the portable media deice.

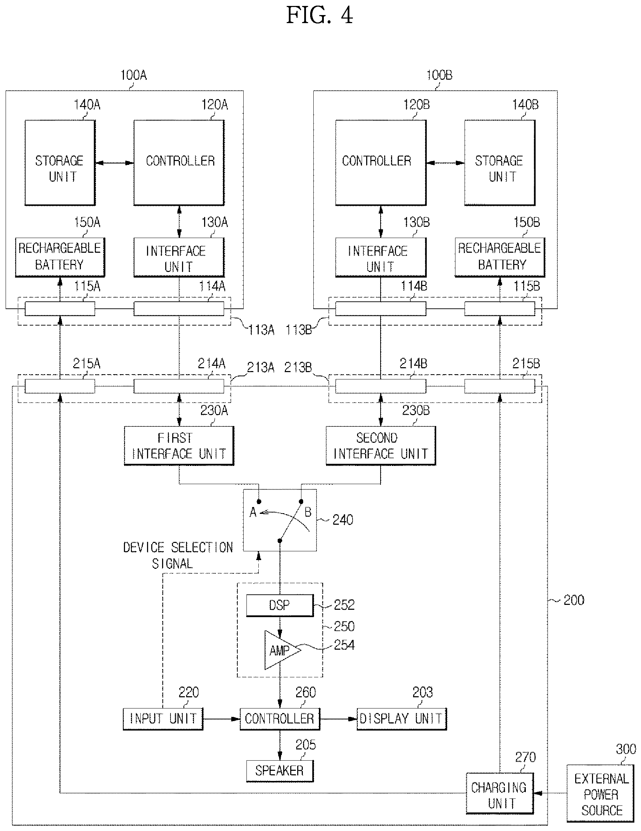

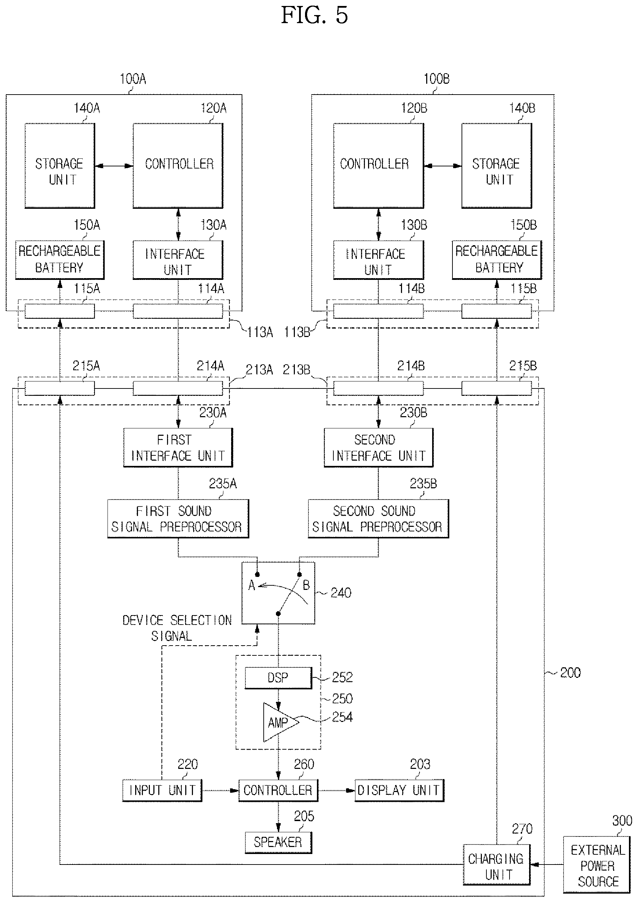

As shown in FIGS. 2A and 2B, a first docking port 213A and a second docking port 213B are installed in the first accommodation unit 212A and the second accommodation unit 212B, for electrical connection with connection ports 113A and 113B (see FIGS. 4 and 5) provided in lower end portions of the plurality of portable media devices 100A and 100B (see FIG. 3). When the user inserts portable media devices into the first and second docking ports 213A and 213B in order to dock the portable media devices, the connection ports 113A and 113B (see FIGS. 4 and 5) of the portable media devices and the first and second docking ports 213A and 213B of the docking station 200 may be coupled to each other to perform data communication or a charging operation. In general, a connection port of a portable media device includes a female connector or a female port, and each of the first and second docking ports 213A and 213B of the docking station 200 includes a male connector or a male plug. The male connector or male plug included in each of the first and second docking ports 213A and 213B is formed with a predetermined size to be tightly inserted into the female connector or female port included in the connection port of the portable media device in order to stably connect the portable media device and the docking station without any gap (for example, there is no engagement except for the female connector).

A plurality of docking ports, that is, the first and second docking ports 213A and 213B installed in the portable media device load unit 210 are provided in a predetermined form for support of reproduction of sound signals of portable media devices belonging to different product groups. That is, the first docking port 213A supports (provides) electrical connection of portable media devices belonging to a product group A (e.g., portable media devices available from Apple Inc., US) and the second docking port 213B supports (provides) electrical connection of portable media devices belonging to a product group B (e.g., the GALAXY series available from Samsung Electronics, Korea).

Likewise, the docking station 200 according to the present embodiment includes a plurality of docking ports installed therein to electrically connect a plurality of portable media devices belonging to different product groups to the portable media device load unit 210, and thus, the user may freely connect a plurality of portable media devices belonging to different product groups to one docking station, that is, the docking station 200, thereby improving connectivity of a portable media device.

In addition, as shown in FIGS. 2A and 2B, the input unit 220 includes a plurality of manipulation buttons such as an ON/OFF button 221 for power on or off, a device selection button 222 for selection of a portable media device belonging to the product group A as an input device, a device selection button 223 for selection of a portable media device belonging to the product group B as an input device, a CD selection button 224 for selection of reproduction of a CD, volume control buttons 225a and 225b for control of volume of a reproduced sound signal, a rewind button 226 for selection of music to be reproduced, for selection of a radio channel to be listened to, or for a rewind function, a fast forward button 227 for selection of music to be reproduced, for selection of a radio channel to be listened to, or for a fast forward function, a stop/radio tuning mode button 228 for stopping reproduction of a sound signal and for conversion into a radio tuning mode, and a play/pause button 229 for reproduction of a sound signal or for pause of reproduction of a sound signal. The plurality of manipulation buttons may be provided on a separate remote controller to remotely control an operation of the docking station 200 using the remote controller. However, the present disclosure is not limited to the above described embodiment. For example, any arrangement of manipulation buttons may be used to control the operation of the docking station.

FIG. 2C is a diagram of a case in which the first portable media device 100A is loaded on the portable media device load unit 210 of the docking station 200, according to an embodiment of the present disclosure.

When a user wants to dock the first portable media device 100A belonging to the product group A on the docking station 200 and to reproduce a sound signal, the user connects the first portable media device 100A to the first docking port 213A for support of electrical connection with the docking station 200 of the first portable media device 100A belonging to the product group A and manipulates the device selection button 222 for selection of a portable media device belonging to the product group A, which is provided in the input unit 220, to perform a docking operation of the first portable media device 100A, as shown in FIG. 2C. A process of docking the first and second portable media devices 100A and 100B on the docking station 200 will be described in detail with reference to FIG. 4.

FIG. 3 is a diagram for explaining an operation of a case in which two different types of portable media devices are loaded on the docking station 200, according to an embodiment of the present disclosure.

As shown in FIG. 3, the first portable media device 100A belonging to the product group A is loaded on the first accommodation unit 212A of the portable media device load unit 210, and the second portable media device 100B belonging to the product group B is loaded on the second accommodation unit 212B of the portable media device load unit 210.

When a user loads two portable media devices, that is, the first and second portable media devices 100A and 100B belonging to different product groups on the portable media device load unit 210, a docking operation is performed for each of the first and second portable media devices 100A and 100B. In this case, when the user wants to reproduce digital audio stored in the second portable media device 100B belonging to the product group B, which is one of the first and second portable media devices 100A and 100B, and manipulates the device selection button 223 for selection of the second portable media device 100B belonging to the product group B as an input device, which is provided in the input unit 220, a sound signal output from the second portable media device 100B is reproduced via data communication between the second portable media device 100B and the docking station 200.

That is, when the user loads the first and second portable media devices 100A and 100B belonging to different product groups on the portable media device load unit 210 and selects only the second portable media device 100B belonging to the product group B as input device through the device selection button 223, a docking operation for battery charging only is performed on the first portable media device 100A that is not selected as the input device, and a docking operation for reproducing of a digital audio file stored in the second portable media device 100B while simultaneously charging a battery is performed on the second portable media device 100B that is selected as the input device.

In this case, various information related to an operation of the docking station 200, which is, for example, a product name (e.g., GALAXY) of the second portable media device 100B through which a sound signal is being reproduced according to a device selection signal input by a user, and a reproduction time, is displayed on the display unit 203.

FIG. 4 is a control block diagram of the docking station 200 according to an embodiment of the present disclosure.

As shown in FIG. 4, the first and second portable media devices 100A and 100B include controllers 120A and 120B, interface units 130A and 130B, storage units 140A and 140B, rechargeable batteries 150A and 150B, and connection ports 113A and 113B, respectively.

The controllers 120A and 120B control overall operations of the first and second portable media devices 100A and 100B according to an operation command input through a user interface (not shown).

The interface units 130A and 130B perform data communication with the docking station 200 to receive the operation command, for example, from the docking station 200 and to transmit the received operation command, for example, to the controllers 120A and 120B.

A digital audio file, a digital image file, and applications for allowing the first and second portable media devices 100A and 100B to perform various functions may be stored in the storage units 140A and 140B.

In addition, the first and second portable media devices 100A and 100B include the connection ports 113A and 113B, respectively, which are each electrically connected to corresponding ones of the first and second docking ports 213A and 213B installed in the docking station 200. Here, the connection ports 113A and 113B include data communication ports 114A and 114B for data transmission/reception with the docking station 200, and charging ports 115A and 115B for performing a charging operation by receiving power from the docking station 200, respectively.

In addition, as shown in FIG. 4, the docking station 200 according to the present embodiment includes the first and second docking ports 213A and 213B, first and second interface units 230A and 230B, the input unit 220, a switch unit 240, a sound signal processor 250, a controller 260, the display unit 203, the speakers 205, and a charging unit 270.

The first docking port 213A is electrically connected to the corresponding connection port 113A installed on the first portable media device 100A, and the second docking port 213B is electrically connected to the corresponding connection port 113B installed on the second portable media device 100B. That is, the first docking port 213A supports electrical connection of the first portable media device 100A belonging to the product group A with the docking station 200, and the second docking port 213B supports electrical connection of the second portable media device 100B belonging to the product group B with the docking station 200. Here, the first and second docking ports 213A and 213B include data communication ports 214A and 214B for data transmission/reception with the first and second portable media devices 100A and 100B, and charging ports 215A and 215B for performing a charging operation by receiving power from the charging unit 270.

When the user loads at least one portable media device, that is, the first and second portable media devices 100A and 100B on the docking station 200, the connection ports 113A and 113B of the first and second portable media devices 100A and 100B are electrically coupled to the first and second docking ports 213A and 213B of the docking station 200 to perform a docking operation. That is, when at least one portable media device, that is, the first and second portable media devices 100A and 100B are inserted into the docking station 200, the data communication ports 114A and 114B of the first and second portable media devices 100A and 100B and the data communication ports 214A and 214B of the docking station 200 are respectively coupled to each other to transmit and receive data, and the charging ports 115A and 115B of the first and second portable media devices 100A and 100B and the charging ports 215A and 215B of the docking station 200 are respectively coupled to each other such that the first and second portable media devices 100A and 100B receive power from the docking station 200 to perform a charging operation.

The first interface unit 230A performs data communication with the first portable media device 100A to receive digital audio file information or the like from the first portable media device 100A, and transmits the received information or the like to the controller 260. In addition, the second interface unit 230B performs data communication with the second portable media device 100B to receive digital audio file information or the like from the second portable media device 100B and to transmit the received information or the like to the controller 260.

The input unit 220 includes a plurality of manipulation buttons provided outside the main body 201 or on a remote controller (not shown) such that the user inputs a corresponding command for an operation of the docking station 200. Here, a device selection signal generated by manipulating any one of the device selection buttons 222 and 223 included in the input unit 220 by the user is transmitted to the switch unit 240.

The switch unit 240 is connected to the first interface unit 230A or the second interface unit 230B according to the device selection signal transmitted from the input unit 220. That is, when the user manipulates the device selection button 222 in order to select the first portable media device 100A belonging to the product group A as an input device, the switch unit 240 is connected to the first interface unit 230A according to the device selection signal via button manipulation. Thus, the digital audio file information stored in the storage unit 140A of the first portable media device 100A passes through the first docking port 213A and the first interface unit 230A, is converted into an analog sound signal, and then, is transmitted to the sound signal processor 250. When the user manipulates the device selection button 223 in order to select the second portable media device 100B belonging to the product group B as an input device, the switch unit 240 is connected to the second interface unit 230B according to a device selection signal via button manipulation. In this case, the digital audio file information stored in the storage unit 140B of the second portable media device 100B passes through the second docking port 213B and the second interface unit 230B, is converted into an analog sound signal, and then, is transmitted to the sound signal processor 250.

The sound signal processor 250 receives a sound signal transmitted through the first interface unit 230A or the second interface unit 230B and performs various signal processing processes upon the received sound signal. The sound signal processor 250 includes a digital signal processor 252 to perform a signal processing process of performing algebraic calculation on digital data converted from an analog sound signal in order to perform a digital processing process in real time on the analog sound signal received through the first interface unit 230A or the second interface unit 230B, and a sound amplifier 254 to amplify a digital sound signal transmitted from the digital signal processor 252.

The controller 260 controls an overall operation of the docking station 200 according to an operation command input through the input unit 220. The controller 260 controls the docking station 200 to receive the sound signal upon which the digital signal processing process and the amplifying process are performed, from the sound signal processor 250 and to transmit a control signal to the speakers 205 to output the received sound signal through the speakers 205. In addition, the controller 260 controls the docking station 200 to transmit the control signal to the display unit 203 to display various display information generated from the docking station 200 and a current operation state of the docking station 200 on a screen.

The display unit 203 displays various information related to an operation of the docking station 200 according to the control signal of the controller 260.

The speakers 205 externally outputs a sound signal reproduced through the docking station 200 according to the control signal of the controller 260.

The charging unit 270 may convert a common alternating power input from an external power source 300 into power for charging the rechargeable batteries 150A and 150B of the first and second portable media devices 100A and 100B to charge the rechargeable batteries 150A and 150B of the first and second portable media devices 100A and 100B. However, the present disclosure is not limited to the above described embodiment. For example, the docking station may be portable and powered by batteries, and the charging unit 270 may use power from the docking station batteries to charge the rechargeable batteries 150A and 150B of the first and second portable media devices 100A and 100B.

FIG. 5 is a control block diagram of a docking station which is designated by reference numeral 200 according to an embodiment of the present disclosure.

The docking station 200 shown in FIG. 5 is different from the docking station 200 shown in FIG. 4 in that the docking station 200 shown in FIG. 5 further includes a first sound signal preprocessor 235A and a second sound signal preprocessor 235B.

Here, the first sound signal preprocessor 235A is connected between the first interface unit 230A and the switch unit 240 and the second sound signal preprocessor 235B is connected between the second interface unit 230B and the switch unit 240.

The first sound signal preprocessor 235A performs a signal processing process that is further required according to only the properties of the first portable media device 100A belonging to the product group A on a sound signal transmitted through the first docking port 213A and the first interface unit 230A prior to a real sound signal processing process through the sound signal processor 250.

In addition, the second sound signal preprocessor 235B performs a signal processing process that is further required according to only the properties of the second portable media device 100B belonging to the product group B on the sound signal transmitted through the second docking port 213B and the second interface unit 230B prior to a real sound signal processing process through the sound signal processor 250.

In the control block diagram showing the docking station 200 shown in FIG. 5, other components are the same as the components of the docking station 200 shown in FIG. 4, except for the first sound signal preprocessor 235A and the second sound signal preprocessor 235B, and thus, a description thereof is omitted herein.

As is apparent from the above description, in a docking station according to the embodiments of the present invention, a plurality of docking ports for connection of a plurality of portable media devices belonging to different product groups are installed on the docking station, and thus, a plurality of portable media devices belonging to different product groups may be freely connected to one docking station to reproduce a sound signal, thereby improving user convenience.

Although a few embodiments of the present invention have been shown and described, it would be appreciated by those skilled in the art that changes may be made in these embodiments without departing from the principles of the invention, the scope of which is defined in the claims.

## Claims

1. A docking station (200) for docking of a plurality of portable media devices (100A, 100B), the docking station comprising:
a main body (201);
a plurality of accommodation units (212A, 212B) to accommodate the plurality of portable media devices (100A, 100B); and
a plurality of docking ports (213A, 213B) to provide electrical connection between the plurality of portable media devices (100A, 100B) and the docking station (200), the plurality of docking ports (213A, 213B) being installed in the plurality of accommodation units (212A, 212B),
a sound signal processor (250) to perform a signal processing process on a sound signal transmitted from the plurality of portable media devices (100A, 100B) accommodated in the plurality of accommodation units in order to reproduce the sound signal;
wherein each of the plurality of docking ports (213A, 213B) supports electrical connection between the docking station (200) and any one of the plurality of portable media devices (100A, 100B) belonging to the different product groups, wherein a product group comprises a standard connector or data communication protocol for a group of products; and
wherein a first portable media device (100A) of the plurality of portable media devices is not compatible with a second docking port (213B) of the plurality of docking ports;
**characterised by**
a plurality of sound signal preprocessors (235A, 235B) each arranged to receive a sound signal from a respective one of the plurality of portable media devices (100A, 100B), to perform signal processing on the sound signal according to the specific processing requirements of the product group to which the portable media device belongs, and to pass the preprocessed sound signal to the sound signal processor (250).

2. The docking station according to claim 1, wherein the plurality of docking ports (213A, 213B) support data communication and power transmission between the docking station (200) and any one of the plurality of portable media devices (100A, 100B).

3. The docking station according to claim 2, further comprising a plurality of interface units (230A, 230B) to perform the data communication between the docking station (200) and any one of the plurality of portable media devices (100A, 100B) belonging to different product groups.

4. The docking station according to claim 2 or 3, wherein each of the plurality of docking ports (213A, 213B) comprises a data communication port (214A, 214B) to support the data communication, and a charging port (215A, 215B) to support the power transmission.

5. The docking station according to any one of the preceding claims, further comprising:
a speaker (205) to externally output the processed sound signal.

6. The docking station according to claim 1, wherein the sound signal processor (250) comprises:
a digital signal processor (252) to perform a digital signal processing process on the sound signal received through any one of the plurality of interface units; and
a volume amplifier (254) to amplify the processed digital sound signal from the digital signal processor.

7. The docking station according to any one of the preceding claims, further comprising an input unit (220) comprising a device selection button for selection of a portable media device to reproduce the sound signal among the plurality of portable media devices (100A, 100B).

8. The docking station according to claim 7, further comprising a switch unit (240) connected between the plurality of interface units and the sound signal processor (250),
wherein the switch unit is connected to any one of the plurality of interface units according to the device selection signal generated according to a manipulation of the device selection button.

9. The docking station according to claim 8, wherein the plurality of sound signal preprocessors (235A, 235B) are connected between the plurality of interface units and the switch unit (240).

10. The docking station according to any one of the preceding claims, further comprising a display unit (203) to display information generated from the docking station.

11. The docking station according to any one of the preceding claims, wherein the plurality of accommodation units are provided in one side of the main body (201).

12. The docking station according to any one of the preceding claims, comprising:
a first docking port (213A)to accommodate a first portable media device (100A);
a second docking port (213B) to accommodate a second portable media device (100B);
a sound signal processor (250) to process a sound signal from the first docking port (213A) or the second docking port (213B); and
a switch (240)to selectively connect the sound signal processor to the first docking port or the second docking port.

## Patentansprüche

1. Eine Andockstation (200) zum Andocken einer Vielzahl von tragbaren Medienvorrichtungen (100A, 100B), wobei die Andockstation Folgendes beinhaltet:
einen Hauptkörper (201);
eine Vielzahl von Unterbringungseinheiten (212A, 212B) zum Unterbringen der Vielzahl von tragbaren Medienvorrichtungen (100A, 100B); und
eine Vielzahl von Andockanschlüssen (213A, 213B) zum Bereitstellen einer elektrischen Verbindung zwischen der Vielzahl von tragbaren Medienvorrichtungen (100A, 100B) und der Andockstation (200), wobei die Vielzahl von Andockanschlüssen (213A, 213B) in der Vielzahl von Unterbringungseinheiten (212A, 212B) installiert sind,
einen Tonsignalprozessor (250) zum Durchführen eines Signalverarbeitungsprozesses an einem Tonsignal, das von der Vielzahl von tragbaren Medienvorrichtungen (100A, 100B), die in der Vielzahl von Unterbringungseinheiten untergebracht sind, übertragen wird, um das Tonsignal wiederzugeben;
wobei jeder der Vielzahl von Andockanschlüssen (213A, 213B) eine elektrische Verbindung zwischen der Andockstation (200) und einer der Vielzahl von tragbaren Medienvorrichtungen (100A, 100B), die zu unterschiedlichen Produktgruppen gehören, unterstützt,
wobei eine Produktgruppe einen Standardverbinder oder ein Standarddatenkommunikationsprotokoll für eine Gruppe von Produkten beinhaltet; und
wobei eine erste tragbare Medienvorrichtung (100A) der Vielzahl von tragbaren Medienvorrichtungen mit einem zweiten Andockanschluss (213B) der Vielzahl von Andockanschlüssen nicht kompatibel ist;
**gekennzeichnet durch**:
eine Vielzahl von Tonsignalvorprozessoren (235A, 235B), die jeweils angeordnet sind, um ein Tonsignal von einer jeweiligen der Vielzahl von tragbaren
Medienvorrichtungen (100A, 100B) zu empfangen, um eine Signalverarbeitung an dem Tonsignal gemäß den spezifischen Verarbeitungsanforderungen der Produktgruppe, zu der die tragbare Medienvorrichtung gehört, durchzuführen und um das vorverarbeitete Tonsignal an den Tonsignalprozessor (250) weiterzugeben.

2. Andockstation gemäß Anspruch 1, wobei die Vielzahl von Andockanschlüssen (213A, 213B) eine Datenkommunikation und eine Stromübertragung zwischen der Andockstation (200) und einer der Vielzahl von tragbaren Medienvorrichtungen (100A, 100B) unterstützt.

3. Andockstation gemäß Anspruch 2, die ferner eine Vielzahl von Schnittstelleneinheiten (230A, 230B) beinhaltet, um die Datenkommunikation zwischen der Andockstation (200) und einer der Vielzahl von tragbaren Medienvorrichtungen (100A, 100B), die zu unterschiedlichen Produktgruppen gehören, durchzuführen.

4. Andockstation gemäß Anspruch 2 oder 3, wobei jeder der Vielzahl von Andockanschlüssen (213A, 213B) einen Datenkommunikationsanschluss (214A, 214B), um die Datenkommunikation zu unterstützen, und einen Ladeanschluss (215A, 215B), um die Stromübertragung zu unterstützen, beinhaltet.

5. Andockstation gemäß einem der vorhergehenden Ansprüche, die ferner Folgendes beinhaltet:
einen Lautsprecher (205), um das verarbeitete Tonsignal extern auszugeben.

6. Andockstation gemäß Anspruch 1, wobei der Tonsignalprozessor (250) Folgendes beinhaltet:
einen digitalen Signalprozessor (252), um einen digitalen Signalverarbeitungsprozess an dem Tonsignal durchzuführen, das durch eine der Vielzahl von Schnittstelleneinheiten empfangen wird; und
einen Lautstärkeverstärker (254), um das verarbeitete digitale Tonsignal von dem digitalen Signalprozessor zu verstärken.

7. Andockstation gemäß einem der vorhergehenden Ansprüche, die ferner eine Eingabeeinheit (220) beinhaltet, die eine Vorrichtungsselektionstaste zur Selektion einer tragbaren Medienvorrichtung beinhaltet, um das Tonsignal von der Vielzahl von tragbaren Medienvorrichtungen (100A, 100B) wiederzugeben.

8. Andockstation gemäß Anspruch 7, die ferner eine Schaltereinheit (240) beinhaltet, die zwischen der Vielzahl von Schnittstelleneinheiten und dem Tonsignalprozessor (250) verbunden ist, wobei die Schaltereinheit mit einer der Vielzahl von Schnittstelleneinheiten gemäß dem Vorrichtungsselektionssignal verbunden ist, das gemäß einer Betätigung der Vorrichtungsselektionstaste generiert wird.

9. Andockstation gemäß Anspruch 8, wobei die Vielzahl von Tonsignalvorprozessoren (235A, 235B) zwischen der Vielzahl von Schnittstelleneinheiten und der Schaltereinheit (240) verbunden sind.

10. Andockstation gemäß einem der vorhergehenden Ansprüche, die ferner eine Anzeigeeinheit (203) beinhaltet, um Informationen anzuzeigen, die von der Andockstation generiert werden.

11. Andockstation gemäß einem der vorhergehenden Ansprüche, wobei die Vielzahl von Unterbringungseinheiten in einer Seite des Hauptkörpers (201) bereitgestellt wird.

12. Andockstation gemäß einem der vorhergehenden Ansprüche, die Folgendes beinhaltet:
eine erste Andockstation (213A) zum Unterbringen einer ersten tragbaren Medienvorrichtung (100A);
eine zweite Andockstation (213B) zum Unterbringen einer zweiten tragbaren Medienvorrichtung (100B);
einen Tonsignalprozessor (250) zum Verarbeiten eines Tonsignals von dem ersten Andockanschluss (213A) oder dem zweiten Andockanschluss (213B); und
einen Schalter (240) zum selektiven Verbinden des Tonsignalprozessors mit dem ersten Andockanschluss oder dem zweiten Andockanschluss.

## Revendications

1. Station d'accueil (200) destinée à accueillir une pluralité de dispositifs multimédia portables (100A, 100B), la station d'accueil comprenant :
un corps principal (201) ;
une pluralité d'unités de réception (212A, 212B) pour recevoir la pluralité de dispositifs multimédia portables (100A, 100B) ; et
une pluralité de ports d'accueil (213A, 213B) pour assurer la connexion électrique entre la pluralité de dispositifs multimédia portables (100A, 100B) et la station d'accueil (200), la pluralité de ports d'accueil (213A, 213B) étant installée dans la pluralité d'unités de réception (212A, 212B),
un processeur de signal sonore (250) pour réaliser un processus de traitement de signal sur un signal sonore transmis par la pluralité de dispositifs multimédia portables (100A, 100B) reçus dans la pluralité d'unités de réception afin de reproduire le signal sonore ;
dans lequel chacun de la pluralité de ports d'accueil (213A, 213B) prend en charge la connexion électrique entre la station d'accueil (200) et n'importe lequel de la pluralité de dispositifs multimédia portables (100A, 100B) appartenant aux différents groupes de produits, dans lequel un groupe de produits comprend un connecteur standard ou un protocole de communication de données standard pour un groupe de produits ; et
dans lequel un premier dispositif multimédia portable (100A) de la pluralité de dispositifs multimédia portables n'est pas compatible avec un second port d'accueil (213B) de la pluralité de ports d'accueil ;
**caractérisé par**
une pluralité de préprocesseurs de signal sonore (235A, 235B) agencés chacun pour recevoir un signal sonore depuis un dispositif respectif de la pluralité de dispositifs multimédia portables (100A, 100B), exécuter un traitement de signal sur le signal sonore conformément aux exigences de traitement spécifique du groupe de produits auquel appartient le dispositif multimédia portable, et passer le signal sonore prétraité au processeur de signal sonore (250).

2. Station d'accueil selon la revendication 1, dans laquelle la pluralité de ports d'accueil (213A, 213B) prend en charge une communication de données et une transmission de puissance entre la station d'accueil (200) et n'importe lequel de la pluralité de dispositifs multimédia portables (100A, 100B).

3. Station d'accueil selon la revendication 2, comprenant en outre une pluralité d'unités d'interface (230A, 230B) pour réaliser la communication de données entre la station d'accueil (200) et n'importe lequel de la pluralité de dispositifs multimédia portables (100A, 100B) appartenant à différents groupes de produits.

4. Station d'accueil selon la revendication 2 ou 3, dans laquelle chacun de la pluralité de ports d'accueil (213A, 213B) comprend un port de communication de données (214A, 214B) pour prendre en charge la communication de données, et un port de charge (215A, 215B) pour prendre en charge la transmission de puissance.

5. Station d'accueil selon n'importe laquelle des revendications précédentes, comprenant en outre :
un haut-parleur (205) pour produire extérieurement le signal sonore traité.

6. Station d'accueil selon la revendication 1, dans laquelle le processeur de signal sonore (250) comprend :
un processeur de signal numérique (252) pour exécuter un processus de traitement de signal numérique sur le signal sonore reçu par le biais de n'importe laquelle de la pluralité d'unités d'interface ; et
un amplificateur de volume (254) pour amplifier le signal sonore numérique traité provenant du processeur de signal numérique.

7. Station d'accueil selon n'importe laquelle des revendications précédentes, comprenant en outre une unité d'entrée (220) comprenant une touche de sélection de dispositif pour la sélection d'un dispositif multimédia portable afin de reproduire le signal sonore parmi la pluralité de dispositifs multimédia portables (100A, 100B).

8. Station d'accueil selon la revendication 7, comprenant en outre une unité de commutation (240) connectée entre la pluralité d'unités d'interface et le processeur de signal sonore (250),
dans laquelle l'unité de commutation est connectée à n'importe laquelle de la pluralité d'unités d'interface conformément au signal de sélection de dispositif généré conformément à une manipulation de la touche de sélection de dispositif.

9. Station d'accueil selon la revendication 8, dans laquelle la pluralité de préprocesseurs de signal sonore (235A, 235B) est connectée entre la pluralité d'unités d'interface et l'unité de commutation (240).

10. Station d'accueil selon n'importe laquelle des revendications précédentes, comprenant en outre une unité d'affichage (203) pour afficher des informations générées par la station d'accueil.

11. Station d'accueil selon n'importe laquelle des revendications précédentes, dans laquelle la pluralité d'unités de réception est fournie sur un côté du corps principal (201).

12. Station d'accueil selon n'importe laquelle des revendications précédentes, comprenant :
un premier port d'accueil (213A) pour recevoir un premier dispositif multimédia portable (100A) ;
un second port d'accueil (213B) pour recevoir un second dispositif multimédia portable (100B) ;
un processeur de signal sonore (250) pour traiter un signal sonore provenant du premier port d'accueil (213A) ou du second port d'accueil (213B) ; et
un commutateur (240) pour connecter sélectivement le processeur de signal sonore au premier port d'accueil ou au second port d'accueil.
